# EUROPÄISCHE PATENTSCHRIFT

(11) **EP 3 336 375 B1**
(45) Veröffentlichungstag und Bekanntmachung des Hinweises auf die Patenterteilung: **29.04.2020**
(21) Anmeldenummer: 17206063.4
(22) Anmeldetag: 08.12.2017
(51) Int. Cl.: F16F 7/08, F16F 7/09, D06F 37/20

(54) **REIBUNGSVORRICHTUNG UND REIBUNGSDÄMPFER MIT EINER DERARTIGEN REIBUNGSVORRICHTUNG**
FRICTION DEVICE AND A FRICTION DAMPER COMPRISING SUCH A FRICTION DEVICE
DISPOSITIF DE FRICTION ET AMORTISSEUR À FRICTION DOTÉ D'UN TEL DISPOSITIF DE FRICTION

(30) Priorität: 14.12.2016 DE 102016225036
(43) Veröffentlichungstag der Anmeldung: 20.06.2018
(73) Patentinhaber: SUSPA GmbH, 90518 Altdorf (DE)
(72) Erfinder: Bauer, Michael, 92271 Freihung (DE); Weder, Michael, 90455 Nürnberg (DE)
(74) Vertreter: Rau, Schneck & Hübner Patentanwälte Rechtsanwälte PartGmbB

(56) Entgegenhaltungen:
- EP-A2- 2 541 092
- CN-A- 101 435 477
- DE-A1- 3 016 915
- DE-U- 1 955 235
- GB-A- 1 284 536
- JP-A- H04 371 194
- US-A- 3 866 724
- US-A1- 2006 011 429

## Beschreibung

Die Erfindung betrifft eine Reibungsvorrichtung für einen Reibungsdämpfer sowie einen Reibungsdämpfer mit einer derartigen Reibungsvorrichtung.

Reibungsdämpfer sind für die Erzeugung einer Reibungsdämpfung zwischen zwei beweglich verbundenen Bauteilen beispielsweise aus GB 1 284 536 A, DE 30 16 915 A1, EP 0 763 670 A2, US 3,866,724, DE 19 55 235 U, EP 2 541 092 A2 und US 6,279,693 B1 bekannt.

Der Erfindung liegt die Aufgabe zugrunde, die Funktionalität eines Reibungsdämpfers zu verbessern.

Die Aufgabe wird durch die Merkmale der Ansprüche 1 und 11 gelöst. Der Kern der Erfindung besteht darin, dass eine mit einem Reibungsdämpfer erzielbare Reibungswirkung veränderlich, insbesondere gezielt veränderlich, einstellbar ist. Insbesondere kann eine Reibungskraft, die mittels einer Reibungsvorrichtung zur Erzielung der Reibungswirkung ausübbar ist, gezielt eingestellt werden. Insbesondere ist die veränderliche Einstellbarkeit der Reibungswirkung unmittelbar und unkompliziert möglich. Der Krafteinstellbare Reibungsdämpfer mit einer derartigen Reibungsvorrichtung ist flexibel einsetzbar und ermöglicht insbesondere die Anwendung in einem Produkt, das unterschiedlich, insbesondere bedarfsbedingt, einstellbare Reibungswirkungen aufweisen soll. Ein derartiger Reibungsdämpfer ist beispielsweise vorteilhaft in Waschgeräten einsetzbar. Als Ersatzteil wäre ein einziger erfindungsgemäßer Kraft-einstellbarer Reibungsdämpfer ausreichend, der je nach Einsatzzweck in dem Waschgerät mit der erforderlichen Reibungskraft eingestellt werden kann. Im Sondermaschinenbau kann ein Reibungsdämpfer zur Schwingungsdämpfung eingesetzt werden, wobei die Reibungswirkung individuell an die tatsächlichen Schwingungsverhältnisse in der Maschine angepasst und eingestellt werden kann. Der erfindungsgemäße Reibungsdämpfer ist auch in Fitnessgeräten einsetzbar. Durch die Veränderung der Reibungswirkung kann die dadurch verursachte Gegenkraft gezielt verändert werden. Die Reibungsvorrichtung umfasst einen Reibbelagsträger, mindestens einen an dem Reibbelagsträger angeordneten verstellbaren Reibbelag sowie ein Verstellelement zum verstellbaren Anordnen des mindestens einen Reibbelags an dem Reibbelagsträger. Durch die Verstellung des mindestens einen Reibbelags wird die resultierende Reibungswirkung verändert. Der Reibbelagsträger ist insbesondere einteilig ausgeführt. Der mindestens eine Reibbelag ist an dem Reibbelagsträger bezüglich der Längsachse des Gehäuses fixiert. Insbesondere ist der mindestens eine Reibbelag an dem Reibbelagsträger bezüglich der Längsachse in axialer Richtung und/oder in Umfangsrichtung um die Längsachse fixiert. Es ist auch denkbar, dass der Reibbelag an dem Reibbelagsträger ausschließlich in axialer Richtung bezüglich der Längsachse festgelegt ist und insbesondere in Umfangsrichtung um die Längsachse nicht festgelegt, insbesondere verlagerbar ist.

Eine fensterartige Radialausnehmung des Reibbelagsträgers für den mindestens einen verstellbaren Reibbelag ermöglicht eine unkomplizierte Radialverlagerung des Reibbelags. Die Reibkraftaufbringung ist vereinfacht.

Eine Verstellkulisse, mittels der das Verstellelement relativ zum Reibbelagsträger und entlang einer Verstellrichtung verstellbar angeordnet ist, ermöglicht eine unkomplizierte und unmittelbare Verstellung des Verstellelements relativ zum Reibbelagsträger. Die Verstellung des Verstellelements kann manuell und/oder motorisch, insbesondere elektromotorisch, erfolgen. Die Verstellkulisse ist insbesondere als Bewegungsgewinde ausgeführt, das insbesondere eine kontinuierliche Verstellung ermöglicht. Es ist alternativ denkbar, eine Verstellung mittels einer Rastgeometrie mit mehreren direkten Raststufen auszuführen. In diesem Fall weist die Verstellkulisse mehrere diskontinuierliche, also voneinander getrennte, Verstellstufen auf. Die Verstellung zwischen zwei Verstellstufen erfolgt diskontinuierlich.

Das Verstellelement kann unmittelbar mit dem Reibbelag zusammenwirken, indem der Reibbelag durch das Verstellelement verdrängt wird. Der Reibbelag, der insbesondere aus einem komprimierbaren Material besteht, wird zumindest anteilig komprimiert und dadurch radial nach außen gedrückt.

Zusätzlich oder alternativ ist es möglich, ein Anpressträgerelement vorzusehen, das unmittelbar mit dem Verstellelement zusammenwirkt. Das Verstellelement bewirkt eine Verlagerung des Anpressträgerelements, an dem der Reibbelag gehalten ist. Das Anpressträgerelement wird insbesondere ausschließlich radial bezüglich einer Längsachse verlagert. Das Anpressträgerelement ist Teil eines sogenannten Spreizkolbens, bei dem scheiben- oder hülsenförmige Segmentabschnitte eines Hohlzylinders bezüglich der Zylinderachse radial verlagert werden. Die Segmentabschnitte sind, insbesondere bezüglich des Reibbelags, der an der Außenseite der jeweiligen Verstellelemente angebracht ist, aus einem starren Material hergestellt. Starr bedeutet, dass die einzelnen Segmentabschnitte sich nicht deformieren. Die Segmentabschnitte sind aus einem Material hergestellt, das eine Steifigkeit und/oder Festigkeit aufweist, die größer ist als die des Materials des Reibbelags. Die Segmentabschnitte werden durch das Zusammenwirken mit dem Verstellelement bezüglich der Längsachse strahlenförmig nach außen verlagert, wodurch sich der Außendurchmesser des Anpressträgerelements, das von den Segmentabschnitten gebildet ist, vergrößert.

Das Anpressträgerelement kann Teil einer längsgeschlitzten Hülse sein. In diesem Fall bewirkt das Verstellelement eine Aufweitung des Anpressträgerelements in Umfangsrichtung um die Längsachse. Das Anpressträgerelement wird zumindest anteilig elastisch deformiert. Der Betrag der Aufweitung ist entlang der Umfangsrichtung inhomogen. Im Bereich des Schlitzes ist die Aufweitung vergleichsweise groß, insbesondere maximal. Die Hülse ist insbesondere dünnwandig ausgeführt. Das bedeutet, dass das Verhältnis von Wandstärke zu Durchmesser der Hülse kleiner ist als 0,1, insbesondere kleiner als 0,05, insbesondere kleiner als 0,01 und insbesondere kleiner als 0,005. Die längsgeschlitzte Hülse weist eine Strukturflexibilität auf, die ein Aufweiten der Hülse in Umfangsrichtung ermöglicht.

Die Verlagerung des Reibbelags erfolgt mittelbar durch die Verlagerung des Anpressträgerelements. Der Reibbelag wird durch das Verstellelement also nicht unmittelbar komprimiert, sondern verschoben bzw. verlagert. Der Reibbelag kann infolge der Verlagerung mittelbar komprimiert werden, indem der Reibbelag gegen die Innenseite des Dämpfergehäuses gedrückt wird und/oder indem der Reibbelag beispielsweise infolge der Aufweitung in Umfangsrichtung an der Spreizhülse in Umfangsrichtung gedehnt und damit in Dickenrichtung komprimiert wird.

Ein Anpressabschnitt gemäß Anspruch 2 ermöglicht das unmittelbare Aufbringen einer Anpresskraft von dem Verstellelement auf den Reibbelag. Insbesondere weist der Anpressabschnitt entlang einer Verstellrichtung eine zumindest abschnittsweise veränderlich ausgeführte Kontur auf. Die Kontur kann beispielsweise linear, progressiv oder degressiv verlaufen. Es ist auch denkbar, diese verschiedenartigen Verläufe abschnittsweise miteinander zu kombinieren und insbesondere abschnittsweise eine unveränderliche Kontur vorzusehen. Beispielsweise kann die Kontur einen zunächst progressiven Verlauf aufweisen, dem sich ein linearer Verlauf und/oder ein degressiver Verlauf anschließen. Es ist auch eine andere Kombination möglich. Der Anpressabschnitt wirkt passiv, indem die Verlagerung des Verstellelements zum Reibbelagsträger unmittelbar eine Verstellung des Reibbelags relativ zum Reibbelagsträger bewirkt. Durch die Anpresskraft wird der Reibbelag zumindest teilweise verlagert. Dadurch, dass der Reibbelag insbesondere aus einem kompressiblen Material, insbesondere aus einem geschäumten Kunststoff, hergestellt ist, bewirkt die Anpresskraft auch zumindest anteilig eine Kompression des Reibbelags.

Alternativ ist es möglich, dass die Anpresskraft auf den mindestens einen verstellbaren Reibbelag mittelbar aufgebracht wird. Der mindestens eine verstellbare Reibbelag kann an einem Anpressträgerelement befestigt sein, wobei das Anpressträgerelement von dem Anpressabschnitt mit der Anpresskraft beaufschlagt wird. Ein derartiges Verstellelement mit Anpressträgerelementen ist beispielsweise ein Spreizkolben oder eine längs, also axial, geschlitzte Hülse.

Wesentlich ist, dass das Verstellelement mit dem Anpressabschnitt geeignet ist, die, insbesondere axiale, Verstellbewegung in eine, insbesondere radial gerichtete, Anpressbewegung umzusetzen. Der Reibbelag wird dadurch radial vorgespannt.

Alternativ ist es möglich, den Anpressabschnitt mit mindestens einem aktiv betätigbaren Anpresselement auszuführen. Ein aktives Anpresselement kann beispielsweise als relativ zum Verstellelement, insbesondere radial nach außen verlagerbares Element, ausgeführt sein, um eine aktive Verstellbewegung über eine entsprechende Kinematikvorrichtung von dem Verstellelement auf das Anpresselement zum Anpressen des Reibbelags auszuüben. Für die aktive Verstellbewegung kann die Kinematikvorrichtung mindestens ein Kraftspeicherelement, beispielsweise ein Federelement, und/oder einen Aktuator aufweisen. Die aktive Verstellbewegung kann manuell und/oder motorisch erfolgen.

Eine Ausführung des Anpressabschnitts gemäß Anspruch 3 ermöglicht eine vorteilhafte Beaufschlagung des Reibbelags mit der Anpresskraft. Insbesondere ist es unkompliziert möglich, eine lineare, insbesondere axiale Verstellbewegung in eine vollumfänglich wirkende, radiale Anpressbewegung zu übersetzen.

Ein Betätigungsabschnitt gemäß Anspruch 4 vereinfacht eine unmittelbare Betätigung des Verstellelements. Der Betätigungsabschnitt kann als schlitzförmige Vertiefung ausgeführt sein, die mittels eines entsprechenden Gegenelementes beaufschlagt werden kann.

Ein Betätigungselement gemäß Anspruch 5 vereinfacht ein unmittelbares Betätigen des Verstellelements. Das Betätigungselement weist insbesondere einen Betätigungsgegenabschnitt auf, der mit dem Betätigungsabschnitt am Verstellelement korrespondiert. Insbesondere ist der Betätigungsgegenabschnitt als stegartige Erhebung ausgeführt, die in die schlitzartige Vertiefung des Betätigungsabschnitts unmittelbar eingreifen kann. Das Betätigungselement ist insbesondere in dem Reibungsdämpfer integriert ausgeführt und kann beispielsweise über eine beispielsweise radiale Öffnung im Gehäuse des Reibungsdämpfers unmittelbar betätigt werden. Es ist auch möglich, das Betätigungselement beispielsweise an einem Befestigungselement des Reibungsdämpfers mechanisch zu koppeln, so dass das Betätigungselement über das Befestigungselement verstellbar ist.

Ein ringförmiger Reibbelag gemäß Anspruch 6 ermöglicht eine vorteilhafte, insbesondere gleichmäßige und homogene Beaufschlagung mit der Anpresskraft durch das Verstellelement.

Eine verdrehsichere Befestigung des Reibbelags am Reibbelagsträger gemäß Anspruch 8 gewährleistet eine zuverlässige Reibungswirkung, insbesondere wenn der Reibbelag durch das Verstellelement beaufschlagt wird. Eine unbeabsichtigte Verdrehung des Reibbelags in Folge einer Verdrehbewegung des Verstellelements ist ausgeschlossen.

Ein zusätzlicher, unverstellbar angeordneter Reibbelag gemäß Anspruch 9 gewährleistet eine konstante Grundreibkraft unabhängig von der verstellbar festlegbaren Reibkraft des verstellbaren Reibbelags.

Ein Reibungsdämpfer gemäß Anspruch 10 mit der Reibungsvorrichtung weist die vorstehend erläuterten Vorteile auf, worauf hiermit verwiesen wird.

Ein Reibungsdämpfer gemäß Anspruch 11 ist unaufwändig konstruiert. Ein Gehäuse des Reibungsdämpfers ist im Wesentlichen zweigeteilt ausgeführt.

Eine Ausführung des Reibungsdämpfers gemäß Anspruch 12 ermöglicht eine unmittelbare Axialverlagerung der Gehäuseteile zueinander.

Ein Reibungsdämpfer gemäß Anspruch 13 ermöglicht eine unkomplizierte und unmittelbare Beaufschlagung mit der Reibungskraft.

Die Anordnung der Reibungsvorrichtung gemäß Anspruch 14 ermöglicht eine intuitive und direkte Verstellung der Reibungswirkung.

Weitere vorteilhafte Ausgestaltungen, zusätzliche Merkmale und Einzelheiten der Erfindung ergeben sich aus der nachfolgenden Beschreibung von fünf Ausführungsbeispielen anhand der Zeichnung. Es zeigen:
- Fig. 1: eine perspektivische Gesamtansicht eines erfindungsgemäßen Reibungsdämpfers mit einer erfindungsgemäßen Reibungsvorrichtung gemäß einem ersten Ausführungsbeispiel,
- Fig. 2: eine Fig. 1 entsprechende Teildarstellung des Reibungsdämpfers mit freigelegter Reibungsvorrichtung,
- Fig. 3: einen Längsschnitt gemäß der Schnittlinie III-III in Fig. 1 zur Darstellung der Reibungsvorrichtung in einer ersten Verstellposition,
- Fig. 4: eine Fig. 3 entsprechende Darstellung in einer zweiten, von der ersten Verstellposition verschiedenen Verstellposition,
- Fig. 5: eine vergrößerte perspektivische Darstellung eines Reibbelagsträgers der Reibungsvorrichtung in Fig. 2,
- Fig. 6: eine Seitenansicht des Verstellelements gemäß Fig. 5,
- Fig. 7: einen Längsschnitt gemäß der Schnittlinie VII-VII in Fig. 6,
- Fig. 8: eine vergrößerte Perspektivdarstellung eines Verstellelements der Reibungsvorrichtung gemäß Fig. 2,
- Fig. 9: eine Seitenansicht des Verstellelements gemäß Fig. 8,
- Fig. 10: eine Ansicht gemäß Pfeil X in Fig. 9,
- Fig. 11: eine perspektivische vergrößerte Detailansicht eines Reibbelags der Reibungsvorrichtung gemäß Fig. 2,
- Fig. 12: eine Draufsicht auf den Reibbelag gemäß Fig. 11,
- Fig. 13: ein Betätigungselement zum Betätigen des Verstellelements gemäß Fig. 8 bis 10,
- Fig. 14: eine Fig. 2 entsprechende Darstellung einer Reibungsvorrichtung gemäß einem zweiten Ausführungsbeispiel,
- Fig. 15: eine vergrößerte perspektivische Darstellung des Reibbelagsträgers der Reibungsvorrichtung gemäß Fig. 14,
- Fig. 16: eine Seitenansicht des Reibbelagsträgers gemäß Fig. 15,
- Fig. 17: einen Längsschnitt gemäß Schnittlinie XVII-XVII in Fig. 16,
- Fig. 18: eine perspektivische Darstellung eines einzelnen Reibbelags der Reibungsvorrichtung in Fig. 14,
- Fig. 19: eine Anordnung der einzelnen Reibbeläge gemäß Fig. 18 einer Anordnung gemäß des Reibbelags des ersten Ausführungsbeispiels in Fig. 11,
- Fig. 20: eine perspektivische Darstellung eines Verstellelements gemäß einem dritten Ausführungsbeispiel,
- Fig. 21: eine Schnittdarstellung gemäß Schnittlinie XXI-XXI in Fig. 20 mit zusätzlich dargestellten Reibbelägen,
- Fig. 22: eine Fig. 21 entsprechende Darstellung des Verstellelements mit radial nach außen verlagerten Reibbelägen,
- Fig. 23: eine perspektivische Darstellung eines Verstellelements gemäß einem vierten Ausführungsbeispiel,
- Fig. 24: einen Längsschnitt gemäß Schnittlinie XXIV-XXIV in Fig. 23,
- Fig. 25: eine Fig. 24 entsprechende Darstellung des Verstellelements mit radial verlagerten Reibbelägen,
- Fig. 26: eine Fig. 2 entsprechende Teildarstellung einer Reibungsvorrichtung gemäß einem fünften Ausführungsbeispiel,
- Fig. 27: einen Längsschnitt des Reibungsdämpfers mit der Reibungsvorrichtung gemäß Fig. 26,
- Fig. 28: eine Fig. 2 entsprechende Teildarstellung einer Reibungsvorrichtung gemäß einem sechsten Ausführungsbeispiel,
- Fig. 29: einen Längsschnitt gemäß Schnittlinie XXIX- XXIX in Fig. 28,
- Fig. 30: einen Querschnitt gemäß Schnittlinie XXX- XXX in Fig. 28,
- Fig. 31: eine Fig. 28 entsprechende perspektivische Darstellung, wobei zur Darstellung von Schiebelementen der Reibbelag nicht gezeigt ist,
- Fig. 32: eine Fig. 31 entsprechende Darstellung mit radial nach außen verlagerten Verschiebeelementen,
- Fig. 33: eine Fig. 29 entsprechende Schnittdarstellung mit radial verschobenen Verschiebeelementen,
- Fig. 34: eine Fig. 30 entsprechende Schnittdarstellung mit radial nach außen verlagerten Verschiebeelementen,
- Fig. 35: eine vergrößerte Perspektivdarstellung eines Verschiebeelements gemäß Fig. 32,
- Fig. 36: eine Fig. 2 entsprechende Teildarstellung einer Reibungsvorrichtung gemäß einem siebten Ausführungsbeispiel,
- Fig. 37: eine Schnittdarstellung gemäß Schnittlinie XXXVII-XXXVII in Fig. 36,
- Fig. 38: eine Schnittdarstellung gemäß Schnittlinie XXXVIII-XXXVIII in Fig. 36,
- Fig. 39: eine Fig. 37 entsprechende Darstellung mit radial nach außen verlagerten Verschiebelementen,
- Fig. 40: eine vergrößerte Detaildarstellung eines Verschiebeelements gemäß Fig. 37.

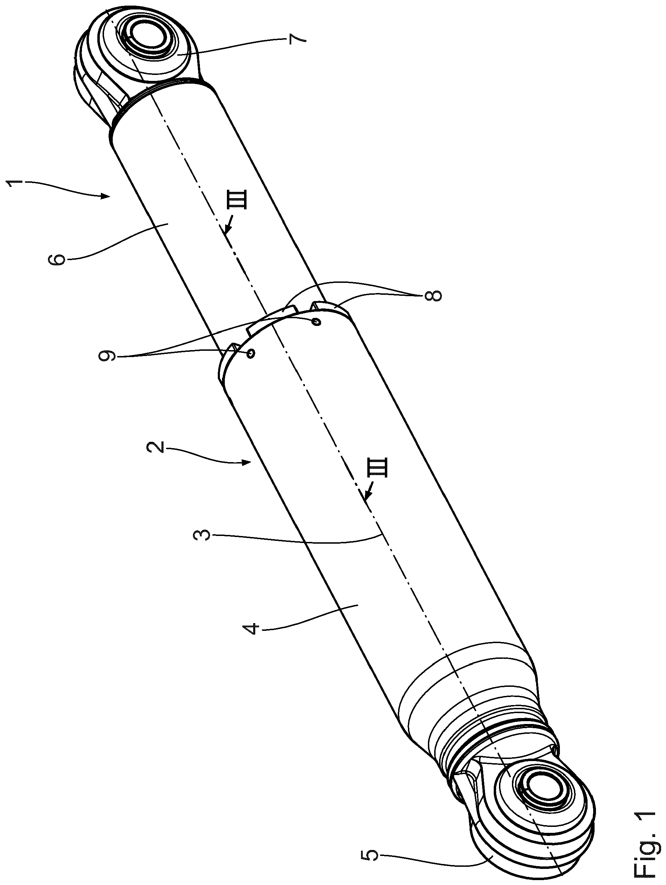

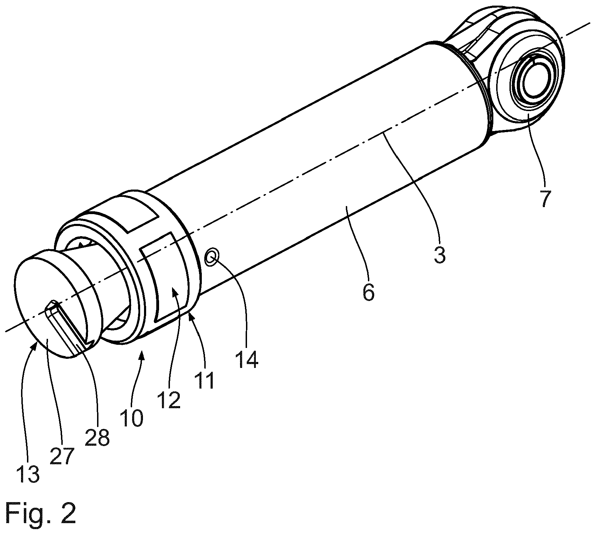

Ein in den Fig. 1 bis 4 dargestellter Reibungsdämpfer 1 weist ein zweigeteiltes Gehäuse 2 mit einer Längsachse 3 auf.

Das Gehäuse 2 weist ein erstes Gehäuseteil 4 auf, das als Außenrohr ausgeführt ist und an dem ein erstes Befestigungselement 5 angebracht ist. Mit dem ersten Befestigungselement 5 kann der Reibungsdämpfer 1 an einer Komponente befestigt werden. An dem dem ersten Befestigungselement 5 zugewandten Ende ist das erste Gehäuseteil 4 verschlossen. An dem dem ersten Befestigungselement 5 gegenüberliegenden Ende ist das erste Gehäuseteil 4 geöffnet. Durch diese Öffnung ist ein zweites Gehäuseteil 6 in Form eines Innenrohrs in das erste Gehäuseteil 4 eingeführt.

An dem dem ersten Gehäuseteil 4 gegenüberliegenden Ende ist das zweite Gehäuseteil 6 verschlossen. An dem verschlossenen Ende des zweiten Gehäuseteils 6 ist ein zweites Befestigungselement 7 vorgesehen, mit dem der Reibungsdämpfer 1 an einer weiteren Komponente befestigt werden kann. Die Befestigungselemente 5, 7 sind beispielsweise jeweils als Befestigungsaugen ausgeführt mit eingesteckten Hülsen, die quer zur Längsachse 3 orientiert sind. Die Gehäuseteile 4, 6 sind relativ zueinander entlang der Längsachse 3 verlagerbar. An dem geöffneten Ende des ersten Gehäuseteils 4 ist ein Führungselement 8 zur geführten Verlagerung des zweiten Gehäuseteils 6 vorgesehen.

Gemäß dem gezeigten Ausführungsbeispiel sind die Gehäuseteile 4, 6 jeweils als Zylinderrohre ausgeführt. Es ist grundsätzlich auch denkbar, dass die Gehäuseteile 4, 6 in einer Ebene senkrecht zur Längsachse 3 eine unrunde Kontur aufweisen. Beispielsweise können die Gehäuseteile 4, 6 als Quadratrohre, Rechteckrohre oder Ovalrohre ausgeführt sein. Bei einer derartigen Ausführung ist eine Verdrehung der Gehäuseteile 4, 6 bezüglich der Längsachse 3 durch Formschluss verhindert.

Der Reibungsdämpfer 1 weist ferner einen Ausziehschutz auf, der verhindert, dass das zweite Gehäuseteil 6 unbeabsichtigt weit aus dem ersten Gehäuseteil 4 herausgezogen wird. Gemäß dem gezeigten Ausführungsbeispiel ist der Ausziehschutz dadurch gewährleistet, dass an dem ersten gehäuseteil 4 radial nach innen vorstehende Formelemente 9 vorgesehen sind, die entlang einer Kreislinie um die Längsachse 3 angeordnet sind. Die Formelemente 9 hintergreifen das Führungselement 8 im Inneren des ersten Gehäuseteils 4. Das Führungselement 8 ist bezüglich der Längsachse 3 axial und radial am ersten Gehäuseteil 4 festgelegt. Das Führungselement 8 ragt in radialer Richtung bezüglich der Längsachse 3 an dem ersten Gehäuseteil 4 nach innen vor.

Gemäß dem gezeigten Ausführungsbeispiel ist an dem zweiten Gehäuseteil 6, also an dem Innenrohr, eine Reibungsvorrichtung 10 befestigt. Die Reibungsvorrichtung 10 umfasst einen Reibbelagsträger 11, einen an dem Reibbelagsträger 11 angeordneten verstellbaren Reibbelag 12 sowie ein Verstellelement 13 zum verstellbaren Anordnen des Reibbelags 12 am Reibbelagsträger 11. Die Reibungsvorrichtung 10 ist entlang der axialen Richtung der Längsachse 3 und bezüglich einer Drehung um die Längsachse 3 am zweiten Gehäuseteil 6 festgelegt. Gemäß dem gezeigten Ausführungsbeispiel ist die Befestigung der Reibungsvorrichtung 10 an dem zweiten Gehäuseteil 6 mittels einer Einprägung 14 am Innenrohr zur Klemmung des Reibbelagsträgers 11 ausgeführt.

Die Reibungsvorrichtung 10 steht in radialer Richtung bezüglich der Längsachse 3 am zweiten Gehäuseteil 6 vor. Das Führungselement 8 bildet einen Ausziehstopp für das zweite Gehäuseteil 6, indem die Reibungsvorrichtung 10, insbesondere der Reibbelagsträger 11, mit einer radial vorstehenden Ringschulter 17 an einer Axialverlagerung durch das Führungselement 8 gehindert ist.

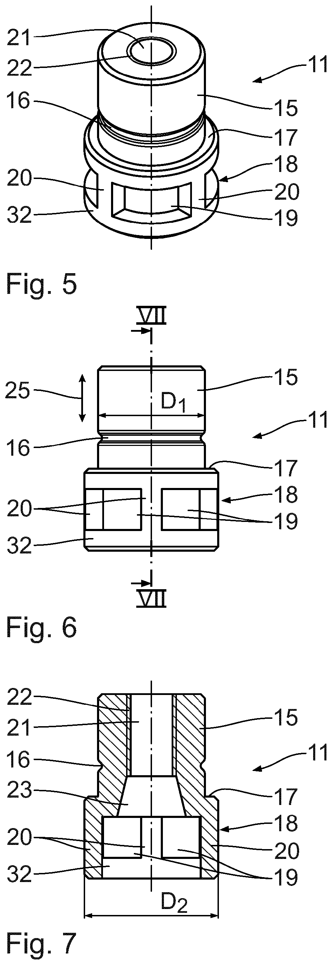

Nachfolgend wird anhand von Fig. 5 bis 7 der Aufbau des Reibbelagsträgers 11 näher erläutert. Der Reibbelagsträger 11 ist einteilig beispielsweise aus Kunststoff ausgeführt. Der Reibbelagsträger 11 ist im Wesentlichen hohlzylindrisch ausgeführt mit einem zapfenartigen Verankerungsabschnitt 15, mit dem der Reibbelagsträger 11 stirnseitig in das Innenrohr des zweiten Gehäuseteils 6 eingesteckt ist. Der Verankerungsabschnitt 15 weist eine umlaufende Innennut 16 auf, in die die Einprägung 14 eingreift, um den Reibbelagsträger 11 am zweiten Gehäuseteil 6 zu halten. Im Bereich des Verankerungsabschnitts 15 weist der Reibbelagsträger 11 einen ersten Außendurchmesser D₁ auf, der im Wesentlichen dem Innendurchmesser des Innenrohrs des zweiten Gehäuseteils 6 entspricht.

Der Reibbelagsträger 11 weist die sich dem Verankerungsabschnitt 15 anschließende, radial vorstehende Ringschulter 17 auf, mit der der Reibbelagsträger 11 an einer ringförmigen Stirnseite des zweiten Gehäuseteils 6 anliegt. Der Reibbelagsträger 11 ist mit der Ringschulter 17 an dem Innenrohr des zweiten Gehäuseteils 6 axial abgestützt.

Entlang einer axialen Richtung schließt sich der Ringschulter 17 ein Trägerabschnitt 18 an. Der Trägerabschnitt 18 weist einen zweiten Außendurchmesser D₂ auf, der größer ist als der erste Außendurchmesser D₁. Der zweite Außendurchmesser D₂ entspricht im Wesentlichen dem Innendurchmesser des Außenrohrs des ersten Gehäuseteils 4. Der Trägerabschnitt 18 weist entlang des äußeren Umfangs mehrere, insbesondere mindestens eine und gemäß dem gezeigten Ausführungsbeispiel genau vier, fensterartige Radialausnehmungen 19 auf. Zwei benachbarte Radialausnehmungen 19 sind jeweils durch einen Axialsteg 20 voneinander getrennt. Stirnseitig weist der Reibbelagsträger 11 im Bereich des Trägerabschnitts 18 einen ringförmigen Steg 32 auf.

Der Reibbelagsträger 11 weist entlang einer Axialrichtung eine Durchgangsbohrung 21 auf. Die Durchgangsbohrung 21 ist im Bereich des Verankerungsabschnitts 15 mit einer Verstellkulisse 22 als Bewegungsgewinde ausgeführt. Im Bereich des Übergangs von dem Verankerungsabschnitt 15 zum Trägerabschnitt 18 ist die Durchgangsbohrung 21 als kegelstumpfförmiger Abstützabschnitt 23 ausgeführt.

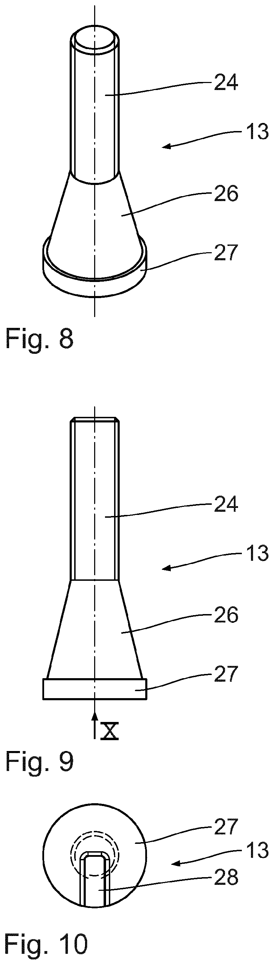

Nachfolgend wird anhand der Fig. 8 bis 10 das Verstellelement 13 näher erläutert. Das Verstellelement 13 weist einen Verstellzapfen 24 auf. Der Verstellzapfen 24 weist ein Außengewinde auf, das mit dem Innengewinde der Verstellkulisse 22 korrespondiert. Das Verstellelement 13 ist mit dem Verstellzapfen 24 an der Verstellkulisse 22 des Reibbelagsträgers 11 entlang einer Verstellrichtung 25 verstellbar anordenbar. Die Verstellrichtung 25 entspricht einer Axialrichtung des Reibbelagsträgers 11.

Die Reibungsvorrichtung 10 ist derart in dem Reibungsdämpfer 1 angeordnet, dass die Verstellrichtung 25 zur Längsachse 3 orientiert ist.

An den Verstellzapfen 24 angrenzend ist ein Anpressabschnitt 26 vorgesehen, der ausgehend von dem Verstellzapfen 24 eine sich konisch aufweitende Kontur aufweist. An einem äußeren Ende weist das Verstellelement 13 ein Anlageelement 27 auf, mit dem das Verstellelement 13 endseitig am Reibbelagsträger 11 zur Begrenzung der Verstellung anliegen kann.

Stirnseitig an dem Anlageelement 27 ist ein Betätigungsabschnitt 28 vorgesehen, der als exzentrisch angeordnete schlitzartige Vertiefung ausgeführt ist.

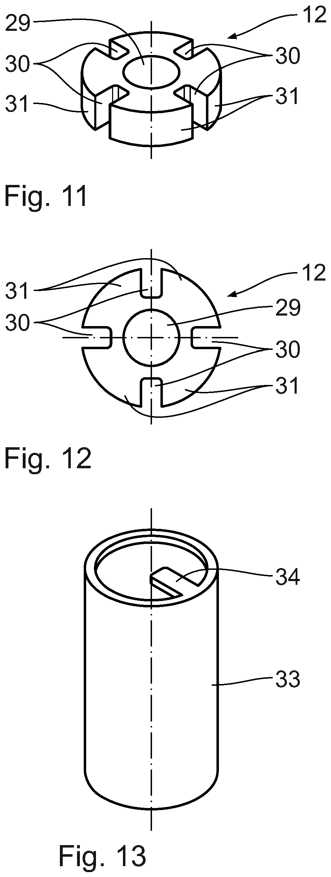

Nachfolgend wird anhand von Fig. 11 und 12 der Reibbelag näher erläutert. Der Reibbelag 12 ist im Wesentlichen ringscheibenförmig ausgeführt mit einer zentralen, kreisförmigen Öffnung 29, durch die das Verstellelement 13 geführt werden kann. Entlang des äußeren Umfangs sind an dem Reibbelag 12 mehrere radial nach innen ragende Ausnehmungen 30 vorgesehen, mit denen der Reibbelag 12 an den Axialstegen 20 des Reibbelagsträgers 11 fixiert werden kann. Dadurch ist ein Verdrehschutz für den Reibbelag 12 im Reibbelagsträger 11 gewährleistet. Zwischen den Ausnehmungen 30 weist der Reibbelag 12 jeweils radial vorstehende Reibbelagsabschnitte 31 auf. Die Geometrie der Reibbelagsabschnitte 31 entspricht im Wesentlichen der Größe der Öffnung der Radialausnehmungen 19 am Reibbelagsträger 11.

Der Reibbelag 12 kann in dem Reibbelagsträger 11, insbesondere innerhalb des Trägerabschnitts 18, derart angeordnet werden, dass die Reibbelagsabschnitte 31 durch die Radialausnehmungen 19 in radialer Richtung nach außen vorstehen. Aufgrund der in die Ausnehmungen 30 eingreifenden Axialstege 20 ist der Reibbelag 12 in einer Drehrichtung um die Längsachse 3 radial fixiert. Durch den stirnseitigen, umlaufenden Ringsteg 32, der von den Reibbelagsabschnitten 31 hintergriffen wird, ist der Reibbelag 12 entlang der Axialrichtung an dem Reibbelagsträger 11 fixiert.

Nachfolgend wird anhand der Fig. 13 ein Betätigungselement näher erläutert. Das Betätigungselement 33 ist im Wesentlichen hohlzylindrisch ausgeführt und weist stirnseitig einen Betätigungsgegenabschnitt 34 auf, der gemäß dem gezeigten Ausführungsbeispiel als exzentrisch bezüglich der Längsachse 3 angeordneter, erhabener Radialvorsprung ausgeführt ist. Der Betätigungsgegenabschnitt 34 ist korrespondierend zu dem Betätigungsabschnitt 28 ausgeführt. Wesentlich ist, dass durch das Zusammenwirken des Betätigungsabschnitts 28 mit dem Betätigungsgegenabschnitt 34 das Verstellelement 13 mit dem Betätigungselement 33 in Drehmoment übertragender Weise um die Längsachse 3 verbindbar ist. Insbesondere besteht Formschluss zwischen dem Verstellelement 13 und dem Betätigungselement 33. Dies ist insbesondere dadurch möglich, dass die jeweilige Kontur von Betätigungsabschnitt 28 und Betätigungsgegenabschnitt 34 in einer Ebene senkrecht zur Längsachse 3 unrund ausgeführt ist. Beispielsweise ist auch eine Außen- oder Innen-Mehrkant-Kontur denkbar, insbesondere eine Vierkant- oder Sechskant-Kontur. Gemäß dem gezeigten Ausführungsbeispiel kann das Betätigungselement 33 im ersten Gehäuseteil 4 integriert ausgeführt und beispielsweise am ersten Befestigungselement 5 befestigt sein.

Anstelle des Formschlusses zur Drehmomentübertragung von dem Betätigungselement 33 auf das Verstellelement 13 kann zusätzlich oder alternativ auch Kraftschluss, insbesondere Reibschluss, dienen.

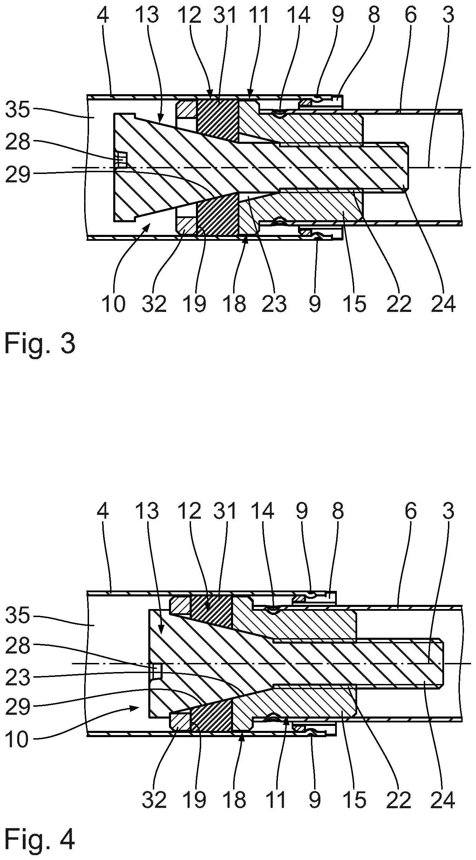

Nachfolgend wird die Funktion des Reibungsdämpfers anhand der Fig. 3 näher erläutert. Die Reibungsvorrichtung 10 ist mit dem Reibbelagsträger 11 in dem Innenrohr 6 gehalten. Der Reibbelag 12 ist in dem Trägerabschnitt 18 des Reibbelagsträges 11 eingelegt, so dass die Reibbelagsabschnitte 31 in den Radialausnehmungen 19 angeordnet sind. Das Verstellelement 13 ist mit dem Verstellzapfen 24 durch die Öffnung 29 des Reibbelags 12 hindurchgeführt und mit dem Außengewinde an der Verstellkulisse 22 des Reibbelagsträgers 11 eingeschraubt.

Gemäß dem gezeigten Ausführungsbeispiel ist der Außendurchmesser des Verstellzapfens 24 kleiner als der Innendurchmesser der Öffnung 29. Solange das Verstellelement 13 derart gering in den Reibbelagsträger 11 eingeschraubt ist, dass innerhalb der Öffnung 29 ausschließlich der Verstellzapfen 24 angeordnet ist, findet eine radiale Aufweitung des Reibbelags 12 nicht statt.

Durch Betätigen des Verstellelements 13 mittels dem Betätigungselement 33, indem der Betätigungsgegenabschnitt 34 an dem Betätigungsabschnitt 28 anliegt, kann ein Drehmoment von dem Betätigungselement 33 auf das Verstellelement 13 übertragen werden. Die Drehbewegung des Verstellelements 13 bewirkt in Folge der Verstellkulisse 22 eine Axialverlagerung des Verstellelements 13. Die Axialverlagerung des Verstellelements 13 entlang der Längsachse 3 bewirkt, dass der sich konisch aufweitende Anpressabschnitt 26 zunehmend in die Öffnung 29 des Reibbelags 12 schiebt.

Sobald der Außendurchmesser des Anpressabschnitts 26 größer ist als der Innendurchmesser der Öffnung 29 des Reibbelags 12, wird der Reibbelag 12 mit einer radial nach außen wirkenden Anpresskraft beaufschlagt. Die Anpresskraft bewirkt einerseits eine Kompression des Materials, aus dem der Reibbelag 12 hergestellt ist. Zusätzlich werden die Reibbelagsabschnitte 31 in Folge der Anpresskraft radial durch die Radialausnehmungen 19 nach außen gedrückt. Der Reibbelag 12 wird unmittelbar gegen eine Innenseite 35 des ersten Gehäuseteils 4, also des Außenrohrs, gedrückt. In Abhängigkeit der Druckkraft, mit der der Reibbelag 12 an der Innenseite 35 des ersten Gehäuseteils 4 anliegt, resultiert eine Kraft bei einer Verlagerung der Gehäuseteile 4, 6 entlang der Längsachse 3 relativ zueinander.

Eine derartige Anordnung ist in Fig. 4 gezeigt. Das Verstellelement 13 ist maximal tief in den Reibbelagsträger 11 eingeschraubt. Das Verstellelement 13 liegt mit dem Anlageelement 27 stirnseitig an dem Ringsteg 32 des Reibbelagsträgers 11 an. Eine weitere Axialverlagerung des Verstellelements 13 entlang der Längsachse 3 ist verhindert. In der Anordnung ist zudem eine weitere Axialverlagerung durch Anliegen des Verstellelements 13 mit dem Anpressabschnitt 26 an dem Abstützabschnitt 23 verhindert. Die Abstützung des Verstellelements 13 an dem Reibbelagsträger 11 ist robust. Eine maximale Einschraubtiefe ist robust festgelegt.

In der in Fig. 4 gezeigten Anordnung wird eine maximale Anpresskraft von dem Anpressabschnitt 26 auf den Reibbelag 12 abgegeben. In dieser Anordnung ist die Reibungswirkung des Reibungsdämpfers 1 maximal.

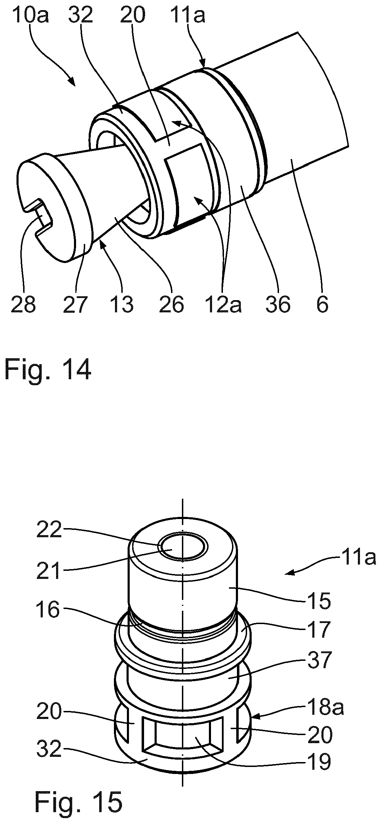

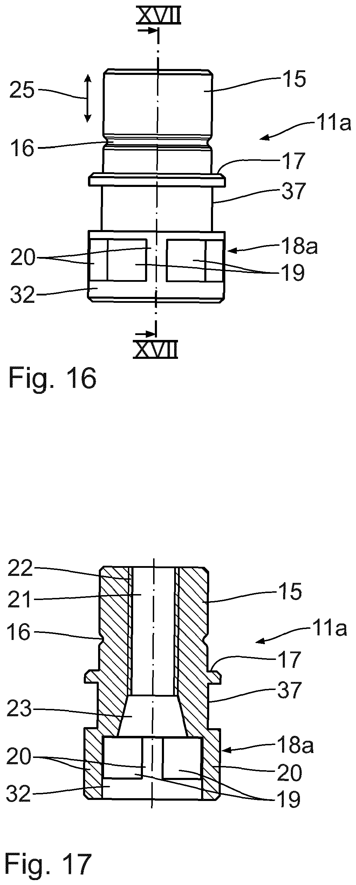

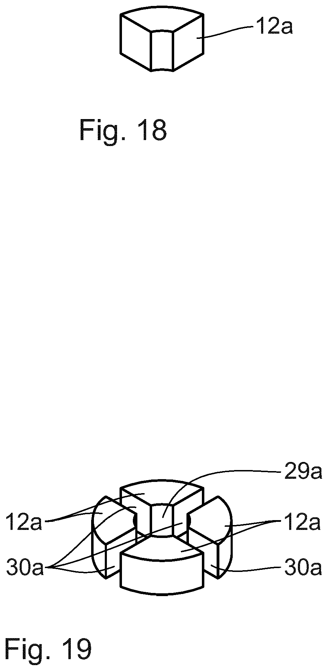

Im Folgenden wird unter Bezugnahme auf Fig. 14 bis 19 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein wesentlicher Unterschied gegenüber der ersten Ausführungsform besteht darin, dass an dem Reibbelagsträger 11a ein weiterer, unverstellbarer Reibbelag 36 angeordnet ist. Dazu weist der Reibbelagsträger 11a eine umlaufende Innennut 37 auf. Der unverstellbare Reibbelag 36 verursacht eine unveränderliche Grundreibung. Der unverstellbare Reibbelag 36 steht im Bereich des Trägerabschnitts 18a radial an dem Reibbelagsträger 11a über. Die Innennut 37 ist Bestandteil des Trägerabschnitts 18a.

Ein weiterer Unterschied der Reibungsvorrichtung 10a gemäß dem zweiten Ausführungsbeispiel besteht darin, dass mehrere Einzelreibbeläge 12a vorgesehen sind. Gemäß dem gezeigten Ausführungsbeispiel sind beispielsweise vier einzelne, voneinander getrennte Reibbeläge 12a vorgesehen. Die Reibbeläge 12a können in einer Anordnung zueinander derart positioniert werden, dass die Anordnung im Wesentlichen der Form des Reibbelags 12 gemäß dem ersten Ausführungsbeispiel entspricht.

Die Reibbeläge 12a entsprechen im Wesentlichen einem Kreisscheibensegment mit einem Öffnungswinkel von beispielsweise 90°. Die Einzelreibbeläge 12a können zu einer Scheibenkontur derart angeordnet werden, dass sie eine im Wesentlichen scheibenförmige Gesamtform mit Öffnung 29a und Ausnehmungen 30a repräsentieren. Die einzelnen Reibbeläge 12a können durch die fensterartigen Radialausnehmungen 19 radial vorstehend mittels des Verstellelements 13 angeordnet und radial vorstehend ausgeführt sein.

Die Einstellung der Reibungsdämpfung, also der auf die Innenseite 35 wirkende radial orientierte Reibungskraft, kann durch die Einschraubtiefe des Verstellelements 13 am Reibbelagsträger 11 unmittelbar und kontinuierlich verstellbar festgelegt werden.

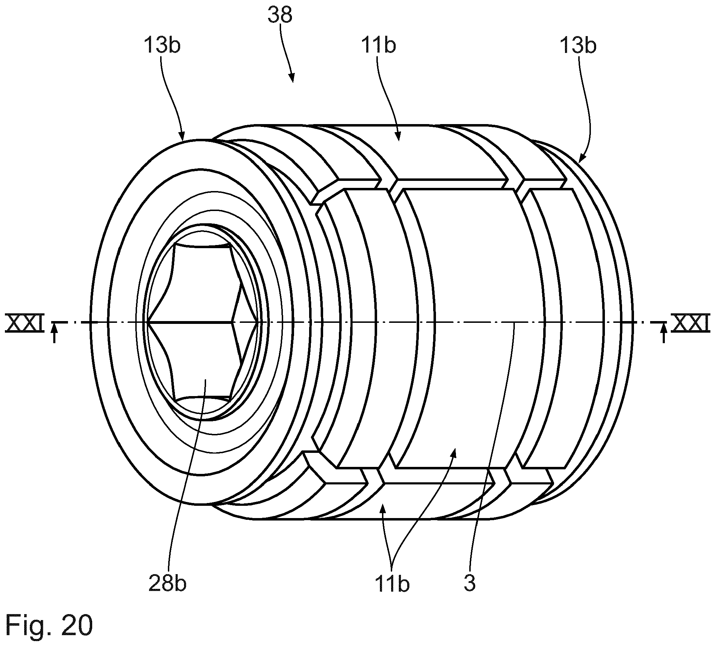

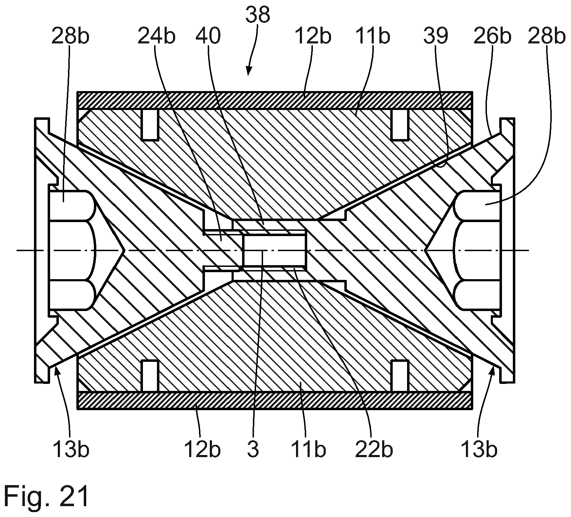

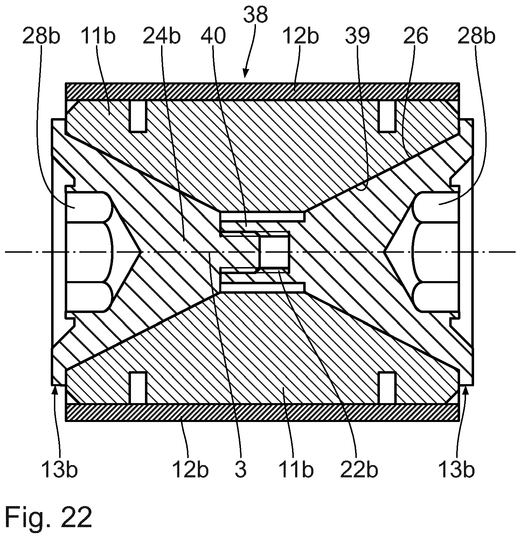

Im Folgenden wird unter Bezugnahme auf Fig. 20 bis 22 ein drittes Ausführungsbeispiel der Erfindung beschrieben. Konstruktiv identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied gegenüber den vorherigen Ausführungsformen besteht darin, dass eine als Spreizkolben bekannte Baugruppe 38 mindestens ein Verstellelement 13b aufweist, mittels dem der Reibbelag 12b radial bezüglich der Längsachse 3 verlagerbar ist. Anders als bei den vorherigen Ausführungsbeispielen wird der Reibbelag 12b mit dem mindestens einen Verstellelement 13b nicht unmittelbar beaufschlagt. Das Verstellelement 13b weist ein Anpressträgerelement 39 auf, das radial verlagerbar ist. Durch die radiale Verlagerung des Anpressträgerelements 39 wird der Reibbelag 12b gegen die Innenseite des Gehäuses 2 des Reibungsdämpfers 1 gedrückt. In Abhängigkeit der Anpresskraft des Reibbelags 12b verändert sich die Reibkraft.

Gemäß dem gezeigten Ausführungsbeispiel sind entlang der Längsachse 3 zwei gegenüberliegend angeordnete Verstellelemente 13b vorgesehen, die mittels eines Bewegungsgewindes entlang der Längsachse 3 aufeinander zu bzw. voneinander weg verlagert werden können. Die Verstellelemente 13b weisen jeweils stirnseitig ein Betätigungselement 28b in Form einer InnenSechskant-Kontur auf.

Die Verstellelemente 13b weisen jeweils einen konisch ausgeführten Anpressabschnitt 26b auf, der jeweils mit damit zusammenwirkenden Reibbelagsträgern 11b zusammenwirkt. Die Reibbelagsträger sind in einer Umfangsrichtung um die Längsachse 3 segmentiert. Entlang des äußeren Umfangs um die Längsachse 3 sind vier Reibbelagsträger 11b angeordnet. Die Reibbelagsträger 11b sind relativ zueinander verlagerbar. Insbesondere sind die Reibbelagsträger 11b nicht unmittelbar miteinander verbunden. An der äußeren Zylindermantelfläche ist an dem jeweiligen Reibbelagsträger 11b ein Reibbelag 12b gehalten, insbesondere befestigt, beispielsweise geklebt. Jeder einzelne Reibbelag 12b wird mit der Radialverlagerung des jeweiligen Reibbelagsträgers 11b radial nach außen verlagert. Durch diese Radialverlagerung allein wird der Reibbelag 12b mechanisch nicht beansprucht. Eine Komprimierung des Reibbelags 12b ergibt sich durch ein Anpressen an die Innenseite des Dämpfergehäuses. In Umfangsrichtung sind zwischen den Reibbelägen 12b parallel zur Längsachse 3 orientierte Längsausnehmungen vorgesehen.

Alternativ ist es denkbar, einen einteiligen Reibbelag 12b an der Außenseite des Spreizkolbens vorzusehen. Durch die Radialverlagerung der Reibbelagsträger 11b wird der einteilige Reibbelag 12b in radialer Richtung aufgeweitet und dadurch radial nach außen verlagert und gedehnt. Zusätzlich wird der Reibbelag 12b gegen die Innenseite des Dämpfergehäuses gepresst. Bei dieser, in den Figuren nicht gezeigten Ausführungsform ist eine in Umfangsrichtung einheitliche, homogene und kontinuierliche Reibkraftwirkung ermöglicht.

Die Reibbelagsträger 11b weisen an einer den Reibbelägen 12b gegenüberliegenden Innenseite mit dem Anpressabschnitt 26b jeweils zusammenwirkendes Anpressträgerelement 39 auf. Durch die Axialverlagerung der gegenüberliegend angeordneten Verstellelemente 13b werden die Reibbelagsträger 11b radial bezüglich der Längsachse 3 nach außen verlagert.

Jeweils stirnseitig an einem innenliegenden Ende weisen die Verstellelemente 13b den Verstellzapfen 24b mit einem Gewinde auf, das in eine Verstellkulisse 22b mit entsprechendem Gegengewinde für die Verstellbewegung entlang der Längsachse 3 eingreift. Die Verstellkulisse 22b kann in dem gegenüberliegend angeordneten Verstellelement 13b integriert sein. Sofern nur ein Verstellelement 13b vorgesehen ist, kann das Gegengewinde im inneren Gehäuseteil des Gehäuses 2 integriert sein.

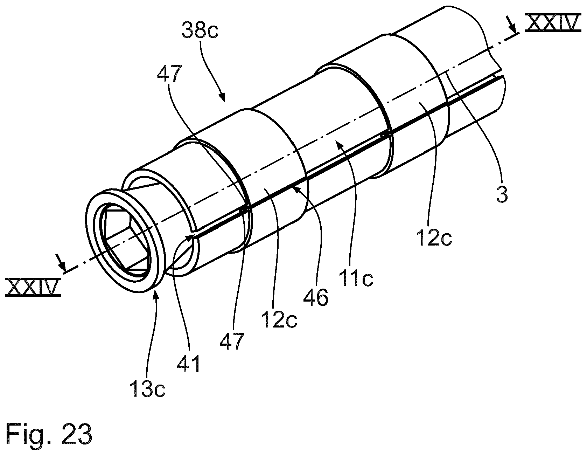

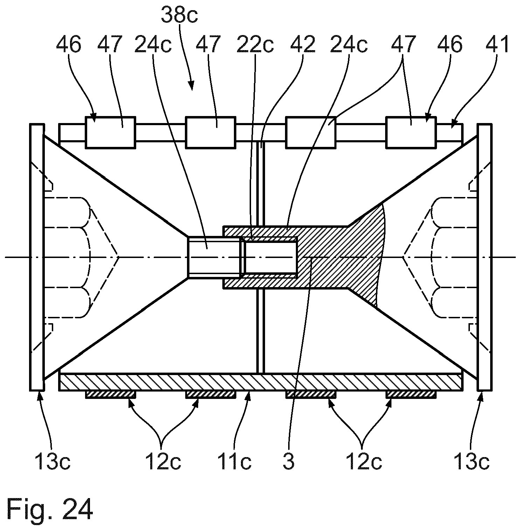

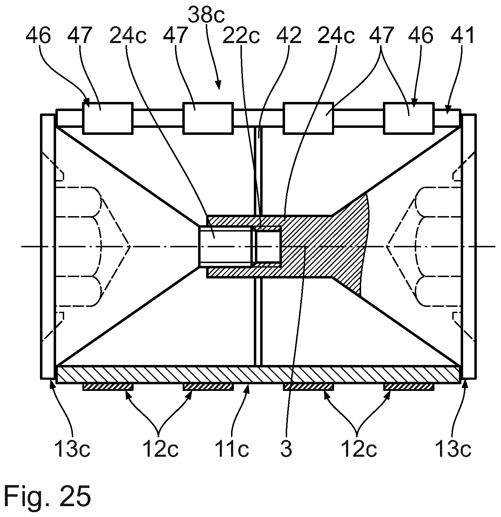

Ein wesentlicher Vorteil des Spreizkolbens 38 besteht darin, dass durch die radiale Verlagerung des Anpressträgerelements 39 nach außen, eine gleichmäßige, insbesondere entlang des Umfangs homogene, Reibkraft an der Innenseite des Gehäuses 2 des Reibungsdämpfers 1 aufgebracht werden kann. Die Aufbringung der Reibungskraft ist insbesondere unabhängig von der Lagebeziehung der Reibungsvorrichtung 10 im Reibungsdämpfer 1. Im Folgenden wird unter Bezugnahme auf Fig. 23 bis 25 ein viertes Ausführungsbeispiel der Erfindung beschrieben. Konstruktiv identische Teile erhalten dieselben Bezugszeichen wie bei den drei ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Der wesentliche Unterschied gegenüber den vorherigen Ausführungsbeispielen besteht darin, dass die Baugruppe 38c, als längsgeschlitzte Hülse ausgeführt ist. Die längsgeschlitzte Hülse 38c weist einen Hülsenkörper auf, der den Reibbelagsträger 11c bildet. Der Reibbelagsträger 11c weist einen, insbesondere parallel zur Längsachse 3 verlaufenden, Längsschlitz 41 auf. Dadurch weist die Baugruppe 38c eine Strukturflexibilität in Umfangsrichtung um die Längsachse 3 auf. Stirnseitig in den Hülsenkörper als Reibbelagsträger 11c einschraubbare Verstellelemente 13c bewirken eine radiale Aufweitung des Hülsenkörpers und damit eine radial verstellbare Anpresskraft auf die an der Außenseite des Hülsenkörpers angebrachten Reibbeläge 12c. Entlang der Längsachse 3 sind gemäß dem gezeigten Ausführungsbeispiel vier voneinander getrennte, separate Reibbeläge 12c vorgesehen. Jeder einzelne Reibbelag 12c ist als dehnbarer, umlaufender Reibring an der Außenseite des Hülsenkörpers angeordnet. Die Reibbeläge 12c sind derart ausgeführt, dass sie jeweils in einem Ausgangszustand einen Innendurchmesser aufweisen, der geringfügig kleiner ist als der Außendurchmesser des Hülsenkörpers im Ausgangszustand. Das bedeutet, dass die Reibbeläge 12c vorgespannt an der Außenfläche des Hülsenkörpers angeordnet sind. Eine zusätzliche Befestigung der Reibbeläge 12c am Hülsenkörper ist entbehrlich. Die Herstellung des Hülsenkörpers ist unkompliziert und kosteneffizient. Eine Aufweitung des Hülsenkörpers ist im Wesentlichen entlang der Umfangsrichtung nicht gleichmäßig. Das bedeutet, dass in dem Bereich des Längsschlitzes 41 eine vergleichsweise erhöhte Dehnung und Aufspreizung auftritt. In diesem Bereich ist mit einer höheren Anpresskraft des Reibbelags 12c an der Innenseite des Gehäuses 2 des Reibungsdämpfers 1 zu rechnen.

Vorteilhaft ist es, wenn an dem Hülsenkörper an einer Innenseite die Verstellkulisse 22c in Form eines Innengewindes integriert ausgeführt ist, in das die Verstellelemente 13c einschraubbar sind, wobei in Abhängigkeit der Einschraubtiefe der Verstellelemente 13c, also deren Axialverlagerung entlang der Längsachse 3 eine korrespondierende axiale Aufweitung der längsgeschlitzten Hülse mittels des Anpressabschnitts 26 erfolgt.

Gemäß dem gezeigten Ausführungsbeispiel sind die Reibbeläge 12c streifenartig entlang einer Umfangslinie um die Längsachse 3 an dem Hülsenkörper angeordnet, insbesondere dort befestigt. Dazu weisen die streifenartigen Reibbeläge 12c einen Schlitz 46 auf, der fluchtend zu dem Längsschlitz 41 des Hülsenkörpers jeweils angeordnet ist. In dem Bereich des Schlitzes 46 weisen die Reibbeläge 12c jeweils voneinander abgewandte Klammerabschnitte 47 auf, die an dem Hülsenkörper nach innen ragend angeordnet sind und die Stirnflächen des Längsschlitzes 41 des Hülsenkörpers umgreifen. Mit diesen Klammerabschnitten 47 ist der Reibbelag 12c mechanisch an dem Hülsenkörper gehalten. Ein Aufweiten des Hülsenkörpers mit den Verstellelementen 13c ist für die Befestigung des Reibbelags 12c unproblematisch. Insbesondere ist ein wiederholtes Beaufschlagen des Hülsenkörpers durch das mindestens eine Verstellelement 13c unproblematisch für die Befestigung des Reibbelags 12c. Aufgrund der mechanischen Befestigung, insbesondere durch Formschluss, ist ausgeschlossen, dass sich der Reibbelag 12c von dem Hülsenkörper löst, wenn eine Klebebefestigung versagt. Zusätzlich oder alternativ ist es möglich, dass die Reibbeläge 12c an dem Hülsenkörper angeklebt sind.

Vorteilhaft ist es, wenn die Verstellkulisse 22c mittels flexibler Elemente 42 zwischen einer Innenwand des Hülsenkörpers und einer Außenwand der Hülse mit der Verstellkulisse gehalten ist. Die flexiblen Elemente 42 können beispielsweise elastische Bänder und/oder eine elastische Ringscheibe sein, um die axiale Fixierung entlang der Längsachse einerseits zu ermöglichen und zudem die radiale Aufweitung, also den veränderlichen Abstand in radialer Richtung zwischen der Innenseite der Hülse und der Außenseite des Körpers für die Verstellkulisse zu kompensieren.

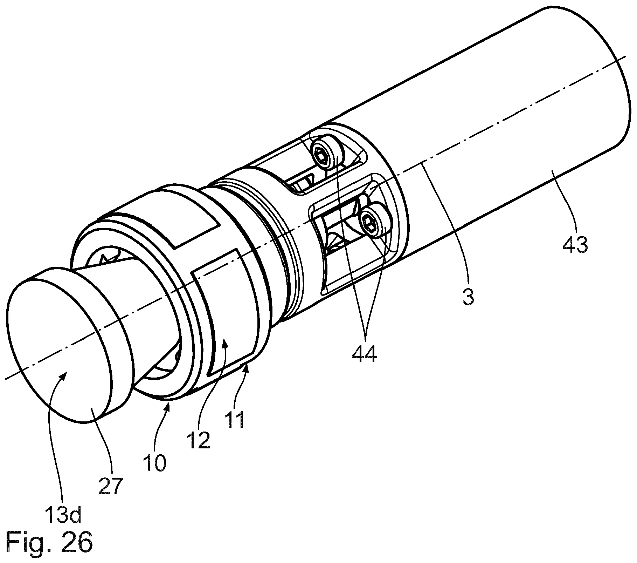

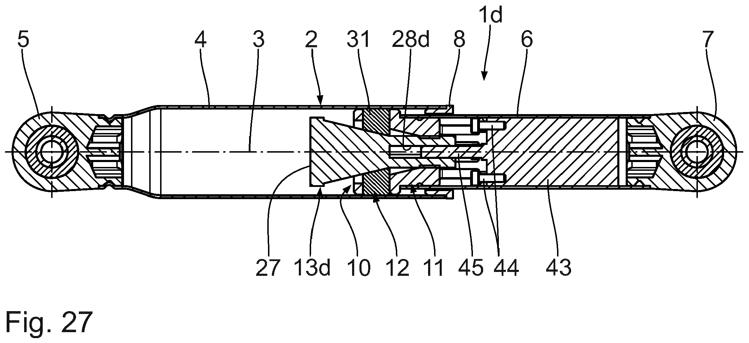

Im Folgenden wird unter Bezugnahme auf Fig. 26 und 27 ein fünftes Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d.

Der wesentliche Unterschied gegenüber den vorherigen Ausführungsbeispielen besteht darin, dass die Verstellung des Verstellelements 13d motorisch erfolgt. Dazu ist ein Antrieb 43 in Form eines Elektromotors vorgesehen, der in dem zweiten Gehäuseteil 6 integriert ist. Der Antrieb 43 ist mittels Befestigungsschrauben 44 gehalten. Der Antrieb, der mit einem Getriebe ausgeführt sein kann, weist eine Abtriebswelle 45 auf. Die Abtriebswelle 45 dient zur Drehmomentübertragung auf das Verstellelement 13d. Gleichzeitig ermöglicht die Abtriebswelle 45 eine Linearverlagerung des Verstellelements 13d entlang der Längsachse 3. Dies ist beispielsweise dadurch möglich, dass die Abtriebswelle 45 eine bezüglich der Längsachse 3 unrunde Außenkontur und das Verstellelement 13d eine dazu korrespondierende Innenkontur aufweist. Die unrunde Innenkontur des Verstellelements 13d ist ein Befestigungselement 28d. Eine derartige Kontur kann beispielsweise viereckig oder sechseckig ausgeführt sein.

Die Stirnseite 27 des Verstellelements 13d ist plan ausgeführt.

Es ist klar, dass auch die anderen Ausführungsbeispiele, bei welchen der Reibbelag jeweils radial verlagert wird, motorisch angetrieben werden können.

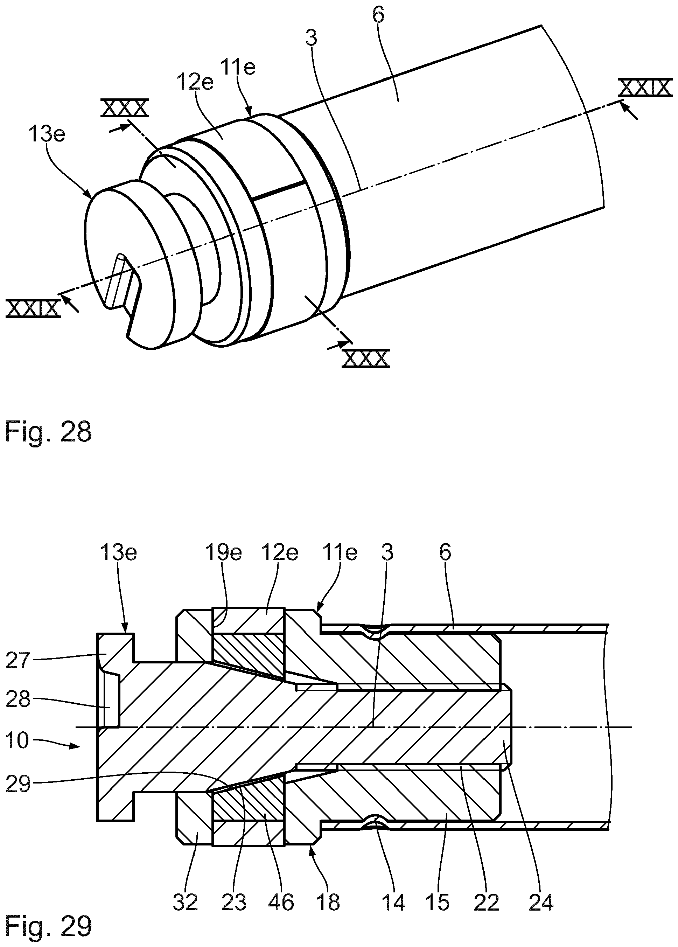

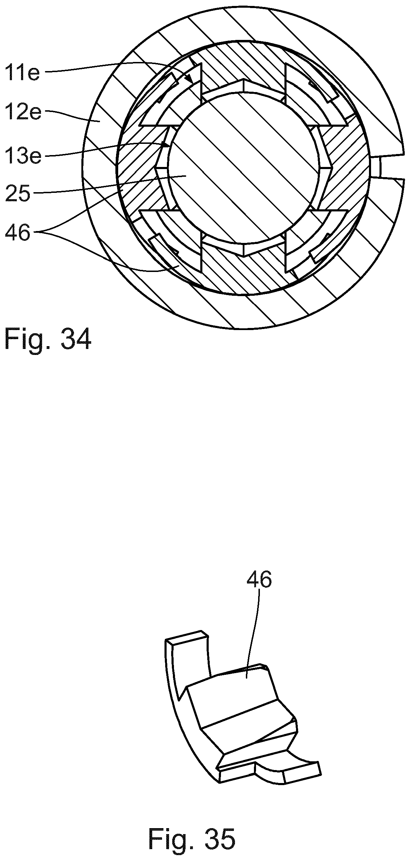

Im Folgenden wird unter Bezugnahme auf Fig. 28 bis 35 ein sechstens Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten e.

Der wesentliche Unterschied gegenüber den vorherigen Ausführungsbeispielen besteht darin, dass das Verstellelement 13e unmittelbar mit mindestens einem Verschiebeelement, gemäß dem gezeigten Ausführungsbeispiel vier Verschiebeelementen 46, zusammenwirkt. Die Verschiebeelemente 46 sind ringsegmentförmig ausgeführt. In Umfangsrichtung um die Längsachse 3 weisen die Verschiebeelemente 46 eine im wesentlichen S-förmige Kontur auf, mit einem Zentralabschnitt und einteilig daran angeformten, sich in Umfangsrichtung um die Längsachse 3 erstreckenden Dehnungsabschnitten, die entlang der Umfangsrichtung um die Längsachse 3 derart angeordnet sind, dass die Dehnungsabschnitte benachbarter Verschiebeelemente ineinander greifen und eine radiale Aufweitung der Verschiebelemente 46 bezüglich der Längsachse 3 ermöglichen. Die beiden an einem Zentralabschnitt einteilig angeformten Dehnungsabschnitte sind bezüglich der Längsachse 3 des Gehäuses versetzt angeordnet. Die vier Verschiebeelemente 46 sind jeweils identisch ausgeführt. An ihrer Innenseite, die dem Verstellelement 13e zugewandt ist, sind die Verschiebeelemente 46 korrespondierend der Außenkontur des Verschiebeelements 13e ausgeführt.

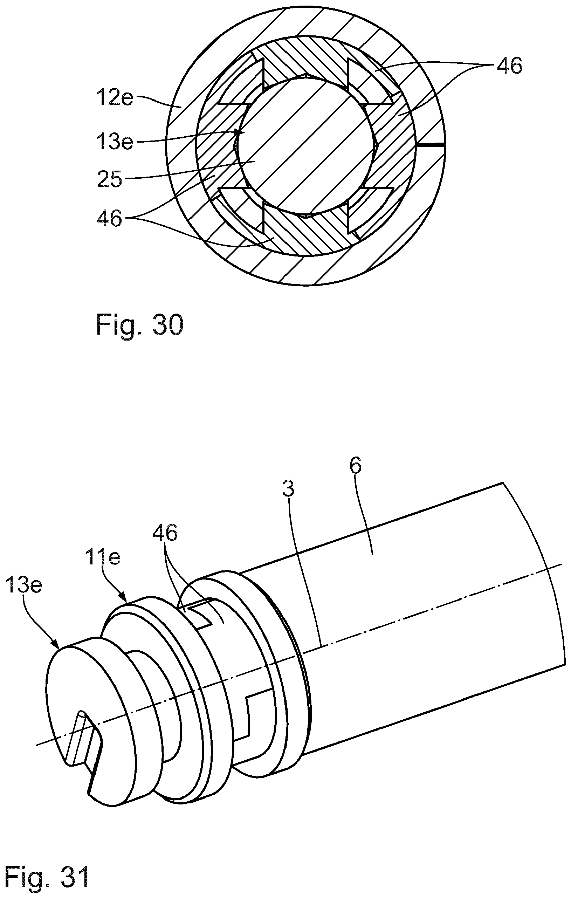

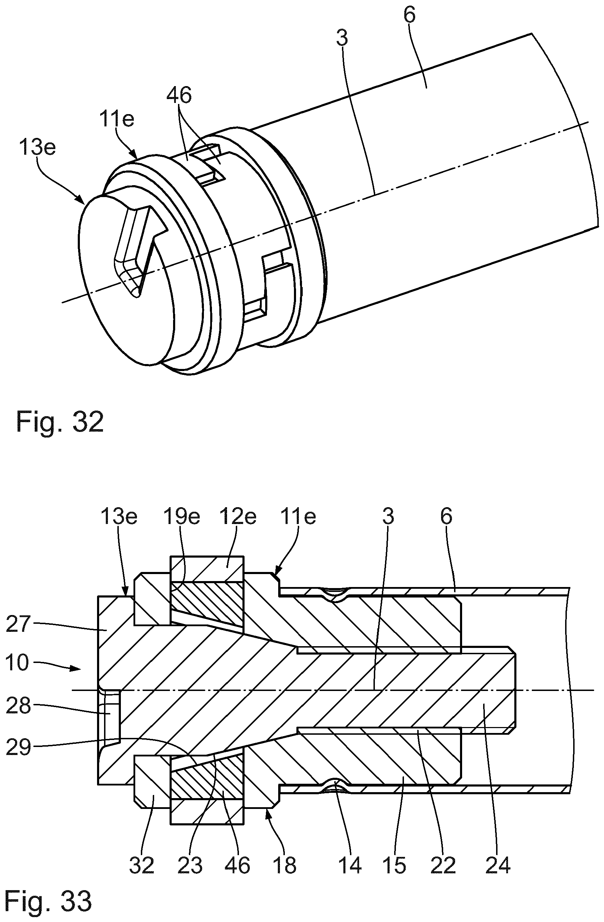

Eine Verlagerung des Verstellelements 13e von der Darstellung gemäß Fig. 29 in die Darstellung gemäß Fig. 33 bewirkt eine radiale Verlagerung der Verschiebeelemente 46 nach außen. Während in der Ausgangsposition gemäß Fig. 31 die Dehnungsabschnitte der Verschiebeelemente 46 sowohl in Umfangsrichtung als auch in Längsrichtung bezüglich der Längsachse 3 aneinander anliegen, sind die Dehnungsabschnitte der Verschiebelemente 46 in der radial aufgeweiteten Anordnung gemäß Fig. 32 voneinander beabstandet. Dadurch, dass mehrere, separat voneinander ausgeführte Verschiebeelemente 46 vorgesehen sind, ist die radiale Aufweitung, also deren Beweglichkeit relativ zueinander, gewährleistet.

Der Reibbelag 12e ist einteilig ausgeführt als Reibstreifen, der ringförmig um die Verschiebeelemente 46 umgelegt ist. Die beiden stirnseitigen Enden des Reibstreifens, die gemäß der Darstellungen in Fig. 30 im Wesentlichen aneinander anliegen und insbesondere einander zugewandt sind, sind relativ zueinander verlagerbar. Dadurch kann der zu dem Ring geformte Reibstreifen aufgeweitet werden. Der Reibstreifen weist eine Beweglichkeit auf, insbesondere in Umfangsrichtung um die Längsachse 3. Der Reibbelag 12e ist bezüglich der Verschiebeelemente 46 jeweils in Umfangsrichtung verlagerbar angeordnet. Der Reibbelag 12e ist insbesondere aus Schaumstoff hergestellt. Der Reibbelag 12e liegt mit seiner äußeren Zylindermantelfläche an der Innenseite des Außenrohres an. Durch die Verlagerung des Verstellelements 13e werden die Verschiebeelemente 46 radial nach außen geschoben und dadurch das Schaumstoffmaterial des Reibbelags 12e radial komprimiert. Da eine radiale Verlagerung nach außen nicht möglich ist, wird der Reibstreifen komprimiert, sodass die Reinkraft erhöht ist.

Der Reibbelag 12e kann auch als geschlossener Reibring ausgeführt sein, indem beispielsweise die beiden stirnseitigen Enden des Reibstreifens miteinander verbunden beispielsweise miteinander verklebt sind. Der Reibbelag ist dann als geschlossener Reibring ausgeführt.

Der Reibbelag 12e kann auch mehrteilig ausgeführt sein und insbesondere an jeweils einem der Verschiebeelemente 46 befestigt sein.

Der wesentliche Vorteil der Ausführung gemäß dem sechsten Ausführungsbeispiel besteht darin, dass durch die Verwendung der Verstellelemente 46 die Bauhöhe des Reibbelags reduziert ist. Für die Kraftverstellung von einem einstellbaren Kraftminimum bis zu einem einstellbaren Kraftmaximum ist also ein reduzierter Verstellweg des Verstellelements 13e ausreichend. Dadurch sind weniger Umdrehungen des Verstellelements 13e erforderlich. Es wurde gefunden, dass der Reibeffekt mit dem Reibbelag 12e, der eine geringere Reibbelagsausdehnung in radialer Richtung bezüglich der Längsachse 3 aufweist, größer ist, als bei einem Reibbelag 12e mit großer radialer Dicke.

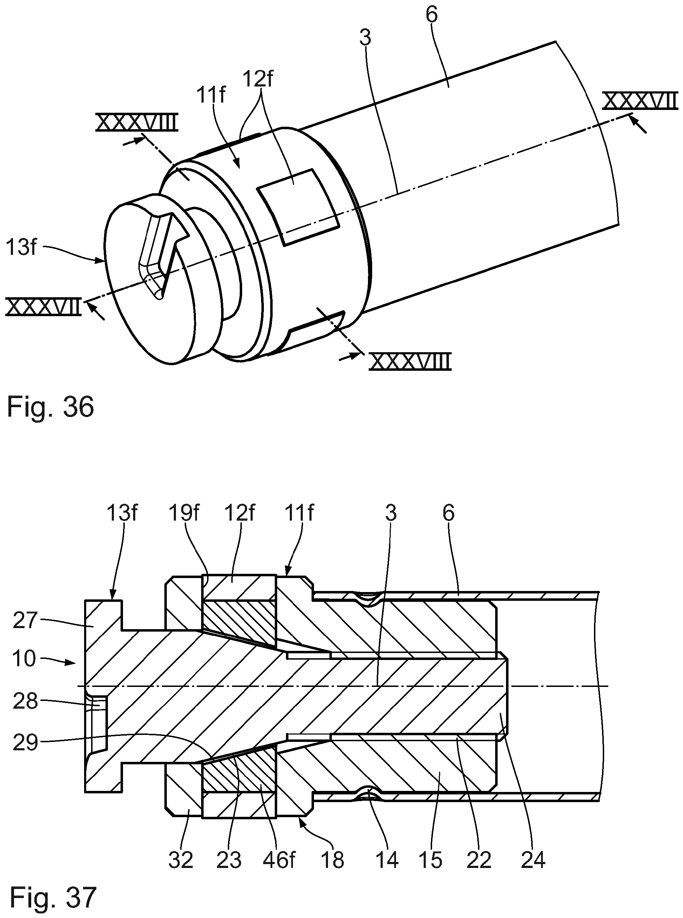

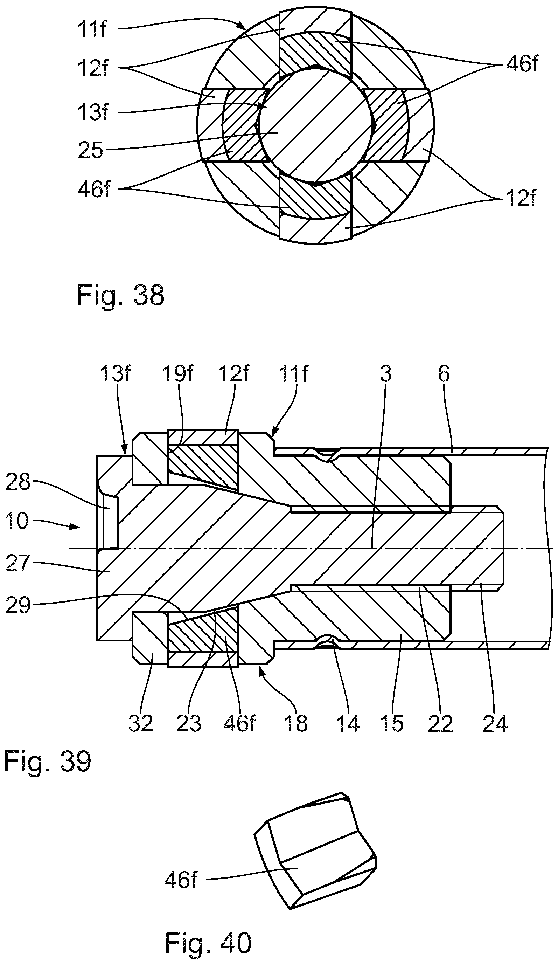

Im Folgenden wird unter Bezugnahme auf die Fig. 36 bis Fig. 40 ein siebtes Ausführungsbeispiel der Erfindung beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten die gleichen Bezugszeichen mit einem nachgestellten f.

Der wesentliche Unterschied gegenüber dem vorherigen Ausführungsbeispiel besteht darin, dass die Verschiebeelemente 46f in einer fensterartigen Radialausnehmung 19f des Reibbelagsträgers 11f angeordnet und in radialer Richtung bezüglich der Längsachse 3 geführt verlagerbar angeordnet sind. Durch die Betätigung des Verstellelements 13f werden die Verschiebeelemente 46f entlang der Radialausnehmung 19f radial verlagert. Die Verschiebeelemente 46f und die daran angeordneten, insbesondere daran befestigten Reibbeläge 12f sind an dem Reibbelagsträger 11f sowohl in Umfangsrichtung um die Längsachse 3 als auch in axialer Richtung der Längsachse 3 fixiert. Gemäß dem gezeigten Ausführungsbeispiel weist der Reibbelagsträger 1 1 f vier Radialausnehmungen 19f auf. Es versteht sich, dass auch mehr oder weniger als vier Radialausnehmungen vorgesehen sein können.

## Patentansprüche

1. Reibungsvorrichtung für einen Reibungsdämpfer, wobei die Reibungsvorrichtung umfasst
a. einen Reibbelagsträger (11; 11a; 11b; 11c; 11e; 11f),
b. mindestens einen an dem Reibbelagsträger (11; 11a; 11b; 11c; 11e; 11f) angeordneten verstellbaren Reibbelag (12; 12a; 12b; 12c; 12e; 12f),
c. ein Verstellelement (13; 13a; 13b; 13c; 13d; 13e; 13f) zum verstellbaren Anordnen des mindestens einen Reibbelags (12; 12a; 12b; 12c; 12e; 12f) am Reibbelagsträger (11; 11a; 11b; 11c; 11e; 11f),
wobei der Reibbelagsträger (11; 11a; 11f) eine fensterartige Radialausnehmung (19) für den mindestens einen verstellbaren Reibbelag (12; 12a; 12b; 12c; 12e; 12f) aufweist,
**dadurch gekennzeichnet, dass** der Reibbelagsträger (11; 11a; 11b; 11c; 11e; 11f) eine Verstellkulisse (22) aufweist, mittels der das Verstellelement (13; 13a; 13b; 13c; 13d; 13e; 13f) relativ zum Reibbelagsträger (11; 11a; 11b; 11c; 11e; 11f) und entlang einer Verstellrichtung (25), verstellbar angeordnet ist, so dass die Reibungswirkung der Reibungsvorrichtung veränderlich einstellbar ist.

2. Reibungsvorrichtung gemäß einem der vorstehenden Ansprüche, **dadurch gekennzeichnet, dass** das Verstellelement (13; 13a; 13b; 13c; 13d; 13e; 13f) einen Anpressabschnitt (26) zum Aufbringen einer Anpresskraft auf den mindestens einen verstellbaren Reibbelag (12; 12a; 12b; 12c; 12e; 12f) aufweist, wobei insbesondere der Anpressabschnitt (26) entlang einer Verstellrichtung (25) eine zumindest abschnittsweise veränderliche Kontur aufweist.

3. Reibungsvorrichtung gemäß Anspruch 2, **dadurch gekennzeichnet, dass** der Anpressabschnitt (26) derart mit dem mindestens einen verstellbaren Reibbelag (12; 12a; 12b; 12c; 12e; 12f) zusammenwirkt, dass eine durch das Verstellen des Verstellelements (13; 13b; 13c; 13d; 13e; 13f) entlang der Verstellrichtung (25) auf den Reibbelag (12; 12a; 12b; 12c; 12e; 12f) wirkende Anpresskraft quer, insbesondere radial, zur Verstellrichtung (25) orientiert ist.

4. Reibungsvorrichtung gemäß einem der vorstehenden Ansprüche, **dadurch gekennzeichnet, dass** das Verstellelement (13; 13a; 13b; 13c; 13d; 13e; 13f) einen Betätigungsabschnitt (28; 28d) aufweist, der in einer senkrecht zur Verstellrichtung (25) orientierten Ebene unrund ausgeführt ist.

5. Reibungsvorrichtung gemäß einem der vorstehenden Ansprüche, **gekennzeichnet durch** ein Betätigungselement (33; 45) zum Betätigen des Verstellelements (13; 13a; 13b; 13c; 13d; 13e; 13f).

6. Reibungsvorrichtung gemäß einem der vorstehenden Ansprüche, **dadurch gekennzeichnet, dass** der mindestens eine verstellbare Reibbelag (12; 12a; 12b; 12c; 12e; 12f) ringförmig um das Verstellelement (13; 13a; 13b; 13c; 13d; 13e; 13f) angeordnet ist.

7. Reibungsvorrichtung gemäß einem der vorstehenden Ansprüche, **dadurch gekennzeichnet, dass** der mindestens eine verstellbare Reibbelag (12; 12a; 12b; 12c; 12e; 12f) verdrehsicher am Reibbelagsträger (11; 11a; 11b; 11c; 11e; 11f) gehalten ist.

8. Reibungsvorrichtung gemäß einem der vorstehenden Ansprüche, **dadurch gekennzeichnet, dass** der Reibbelagsträger (11; 11a; 11f) an einem Trägerabschnitt (18) mehrere Radialausnehmungen (19) aufweist, wobei zwei benachbarte Radialausnehmungen (19) jeweils durch einen Axialsteg (20) voneinander getrennt sind, wobei der Reibbelagsträger (11; 11a; 11f) stimseitig im Bereich des Trägerabschnitts (18) einen ringförmigen Steg (32) aufweist und sich dem Trägerabschnitt (18) in axialer Richtung eine Ringschulter (17) anschließt.

9. Reibungsvorrichtung gemäß einem der vorstehenden Ansprüche, **gekennzeichnet durch** mindestens einen am Reibbelagsträger (11; 11a; 11b; 11c; 11e; 11f) angeordneten unverstellbaren Reibbelag (36).

10. Reibungsdämpfer mit einer Reibungsvorrichtung gemäß einem der vorstehenden Ansprüche.

11. Reibungsdämpfer gemäß Anspruch 10, **gekennzeichnet durch** ein erstes Gehäuseteil (4) mit einem ersten Befestigungselement (5) und ein zweites Gehäuseteil (6) mit einem zweiten Befestigungselement (7), wobei die Gehäuseteile (4, 6) entlang einer Längsachse (3) relativ zueinander verlagerbar sind.

12. Reibungsdämpfer gemäß Anspruch 11, **dadurch gekennzeichnet, dass** das erste Gehäuseteil (4) als Außenrohr und das zweite Gehäuseteil (6) als in das Außenrohr einsteckbares Innenrohr ausgeführt sind.

13. Reibungsdämpfer gemäß einem der Ansprüche 11 bis 12, **dadurch gekennzeichnet, dass** der mindestens eine Reibbelag (12; 12a; 12b; 12c; 12e; 12f) zur Erzeugung einer Reibungskraft an einer Innenseite (35) des ersten Gehäuseteils (4) oder an einer Innenseite (35) des zweiten Gehäuseteils (6) verstellbar anpressbar anliegt.

14. Reibungsdämpfer gemäß einem der Ansprüche 10 bis 13, **dadurch gekennzeichnet, dass** die Reibungsvorrichtung (10) derart in dem Reibungsdämpfer (1) angeordnet ist, dass die Verstellrichtung (25) konzentrisch zur Längsachse (3) orientiert ist.

## Claims

1. Frictional device for a frictional damper, wherein the frictional device comprises
a. a friction lining carrier (11; 11a; 11b; 11c; 11e; 11f),
b. at least one friction lining (12; 12a; 12b; 12c; 12e; 12f) adjustably arranged on the friction lining carrier (11; 11a; 11b; 11c; 11e; 11f),
c. an adjustment element (13; 13a; 13b; 13c; 13d; 13e; 13f) for adjustably arranging the at least one friction lining (12; 12a; 12b; 12c; 12e; 12f) on the friction lining carrier (11; 11a; 11b; 11c; 11e; 11f),
wherein the friction lining carrier (11; 11a; 11f) has a window-like radial recess (19) for the at least one adjustable friction lining (12; 12a; 12b; 12c; 12e; 12f),
**characterized in that** the friction lining carrier (11; 11a; 11b; 11c; 11e; 11f) has a slotted adjustment guide (22) by means of which the adjustment element (13; 13a; 13b; 13c; 13d; 13e; 13f), is arranged adjustably relative to the friction lining carrier (11; 11a; 11b; 11c; 11e; 11f) and along an adjustment direction (25), so that the frictional action of the frictional device is adjustable in a variable manner.

2. Frictional device according to either of the preceding claims, **characterized in that** the adjustment element (13; 13a; 13b; 13c; 13d; 13e; 13f) has a pressing portion (26) for applying a pressing force to the at least one adjustable friction lining (12; 12a; 12b; 12c; 12e; 12f), wherein in particular the pressing portion (26) has a contour which is variable at least in sections along an adjustment direction (25).

3. Frictional device according to Claim 2, **characterized in that** the pressing portion (26) interacts with the at least one adjustable friction lining (12; 12a; 12b; 12c; 12e; 12f) in such a manner that a pressing force acting on the friction lining (12; 12a; 12b; 12c; 12e; 12f) by adjustment of the adjustment element (13; 13b; 13c; 13d; 13e; 13f) along the adjustment direction (25) is oriented transversely, in particular radially, with respect to the adjustment direction (25).

4. Frictional device according to one of the preceding claims, **characterized in that** the adjustment element (13; 13a; 13b; 13c; 13d; 13e; 13f) has an actuating portion (28; 28d) which is designed noncircularly in a plane oriented perpendicularly to the adjustment direction (25).

5. Frictional device according to one of the preceding claims, **characterized by** an actuating element (33; 45) for actuating the adjustment element (13; 13a; 13b; 13c; 13d; 13e; 13f).

6. Frictional device according to one of the preceding claims, **characterized in that** at least one adjustable friction lining (12; 12a; 12b; 12c; 12e; 12f) is arranged annularly around the adjustment element (13; 13a; 13b; 13c; 13d; 13e; 13f).

7. Frictional device according to one of the preceding claims, **characterized in that** the at least one adjustable friction lining (12; 12a; 12b; 12c; 12e; 12f) is held on the friction lining carrier (11; 11a; 11b; 11c; 11e; 11f) in a manner secure against rotation.

8. Frictional device according to one of the preceding claims, **characterized in that** the friction lining carrier (11; 11a; 11f) has a plurality of radial recesses (19) at the carrier portion (18), wherein two adjacent radial recesses (19) are in each case separated from each other by an axial web (20), wherein the friction lining carrier (11; 11a; 11f) has an annular web (32) on the end side in the region of the carrier portion (18) and an annular shoulder (17) is connected to the carrier portion (18) in axial direction.

9. Frictional device according to one of the preceding claims, **characterized by** at least one non-adjustable friction lining (36) arranged on the friction lining carrier (11; 11a; 11b; 11c; 11e; 11f).

10. Frictional damper with a frictional device according to one of the preceding claims.

11. Frictional damper according to Claim 10, **characterized by a** first housing part (4) with a first fastening element (5) and a second housing part (6) with a second fastening element (7), wherein the housing parts (4, 6) are shiftable relative to each other along a longitudinal axis (3).

12. Frictional damper according to Claim 11, **characterized in that** the first housing part (4) is designed as an outer tube and the second housing part (6) is designed as an inner tube which is insertable into the outer tube.

13. Frictional damper according to one of Claims 11 to 12, **characterized in that** the at least one friction lining (12; 12a, 12b; 12c; 12e; 12f) lies in a manner pressable adjustably against an inner side (35) of the first housing part (4) or against an inner side (35) of the second housing part (6) in order to produce a frictional force.

14. Frictional damper according to one of Claims 10 to 13, **characterized in that** the frictional device (10) is arranged in the frictional damper (1) in such a manner that the adjustment direction (25) is oriented concentrically with respect to the longitudinal axis (3).

## Revendications

1. Dispositif à friction pour un amortisseur à friction, le dispositif de friction comprenant
a. un support de garniture de friction (11 ; 11a ; 11b ; 11e ; 11e ; 11f),
b. au moins une garniture de friction réglable (12 ; 12a ; 12b ; 12c ; 12e ; 12f) disposée sur le support de garniture de friction (11 ; 11a ; 11b ; 11c, 11e ; 11f),
c. un élément de réglage (13 ; 13a ; 13b ; 13c ; 13d ; 13e ; 13f) pour la disposition réglable de l'au moins une garniture de friction (12 ; 12a ; 12b ; 12c ; 12e ; 12f) sur le support de garniture de friction (11 ; 11a ; 11b ; 11c ; 11e ; 11f),
dans lequel le support de garniture de friction (11 ; 11a ; 11f) présente un évidement radial (19) en forme de fenêtre pour l'au moins une garniture de friction réglable (12 ; 12a ; 12b ; 12c ; 12e ; 12f), **caractérisé en ce que** le support de garniture de friction (11 ; 11a ; 11b ; 11e ; 11e ; 11f) présente une coulisse de réglage (22) au moyen de laquelle l'élément de réglage (13 ; 13a ; 13b ; 13c ; 13d ; 13e ; 13f) est disposé de manière réglable par rapport au support de garniture de friction (11 ; 11a ; 11b ; 11e ; 11e ; 11f) et le long d'une direction de réglage (25), de sorte que l'effet de friction du dispositif de friction peut être réglé de manière variable.

2. Dispositif à friction selon l'une des revendications précédentes, **caractérisé en ce que** l'élément de réglage (13 ; 13a ; 13b ; 13c ; 13d ; 13e ; 13f) présente une partie de pression (26) permettant d'appliquer une force de pression sur l'au moins une garniture de friction réglable (12 ; 12a ; 12b ; 12c ; 12e ; 12f), la partie de pression (26) présentant en particulier un contour variable au moins par sections le long d'une direction de réglage (25).

3. Dispositif à friction selon la revendication 2, **caractérisé en ce que** la partie de pression (26) coopère avec l'au moins une garniture de friction réglable (12 ; 12a ; 12b ; 12c ; 12e ; 12f) de telle sorte qu'une force de friction agissant, grâce au réglage de l'élément de réglage (13 ; 13b ; 13c ; 13d ; 13e ; 13f) le long de la direction de réglage (25), sur la garniture de friction (12 ; 12a ; 12b ; 12c ; 12e ; 12f), est orientée transversalement, en particulier radialement, par rapport à la direction de réglage (25).

4. Dispositif à friction selon l'une des revendications précédentes, **caractérisé en ce que** l'élément de réglage (13 ; 13a ; 13b ; 13c ; 13d ; 13e ; 13f) présente une partie d'actionnement (28 ; 28d) réalisée de manière non circulaire dans un plan orienté perpendiculairement à la direction de réglage (25).

5. Dispositif à friction selon l'une des revendications précédentes, **caractérisé par** un élément d'actionnement (33 ; 45) permettant d'actionner l'élément de réglage (13 ; 13a ; 13b ; 13c ; 13d ; 13e ; 13f).

6. Dispositif à friction selon l'une des revendications précédentes, **caractérisé en ce que** l'au moins une garniture de friction réglable (12 ; 12a ; 12b ; 12c ; 12e ; 12f) est disposée en forme d'anneau autour de l'élément de réglage (13 ; 13a ; 13b ; 13c ; 13d ; 13e ; 13f).

7. Dispositif à friction selon l'une des revendications précédentes, **caractérisé en ce que** l'au moins une garniture de friction réglable (12 ; 12a ; 12b ; 12c ; 12e ; 12f) est maintenue sans possibilité de rotation sur le support de garniture de friction (11 ; 11a; 11b ; 11c ; 11e ; 11f).

8. Dispositif à friction selon l'une des revendications précédentes, **caractérisé en ce que** le support de garniture de friction (11 ; 11a; 11f) présente plusieurs évidements radiaux (19) sur une section de support (18), deux évidements radiaux (19) voisins étant séparés l'un de l'autre par une nervure axiale (20), le support de garniture de friction (11 ; 11a ; 11f) présentant une nervure annulaire (32) sur la face frontale dans la zone de la section de support (18), et un épaulement annulaire (17) se raccordant à la section de support (18) dans la direction axiale.

9. Dispositif à friction selon l'une des revendications précédentes, **caractérisé en ce que** l'au moins une garniture de friction (36) non réglable est disposée sur le support de garniture de friction (11 ; 11a ; 11b ; 11c ; 11e ; 11f).

10. Amortisseur à friction comportant un dispositif de friction selon l'une des revendications précédentes.

11. Amortisseur à friction selon la revendication 10, **caractérisé par** une première partie de boîtier (4) comportant un premier élément de fixation (5) et une seconde partie de boîtier (6) comportant un second élément de fixation (7), les parties de boîtier (4, 6) étant déplaçables l'une par rapport à l'autre le long d'un axe longitudinal (3).

12. Amortisseur à friction selon la revendication 11, **caractérisé en ce que** la première partie de boîtier (4) est conçue comme un tube extérieur et la seconde partie de boîtier (6) est conçue comme un tube intérieur qui peut être inséré dans le tube extérieur.

13. Amortisseur à friction selon l'une des revendications 11 à 12, **caractérisé en ce que** l'au moins une garniture de friction (12 ; 12a ; 12b ; 12c ; 12e ; 12f) destinée à générer une force de friction s'appuie par pression de manière réglable contre un côté intérieur (35) de la première partie de boîtier (4) ou contre un côté intérieur (35) de la seconde partie de boîtier (6).

14. Amortisseur à friction selon l'une des revendications 10 à 13, **caractérisé en ce que** le dispositif à friction (10) est disposé dans l'amortisseur à friction (1) de telle sorte que la direction de réglage (25) est orientée concentriquement par rapport à l'axe longitudinal (3).
